# EUROPÄISCHE PATENTSCHRIFT

(11) **EP 3 052 998 B1**
(45) Veröffentlichungstag und Bekanntmachung des Hinweises auf die Patenterteilung: **08.08.2018**
(21) Anmeldenummer: 14777363.4
(22) Anmeldetag: 30.09.2014
(51) Int. Cl.: G05B 19/042, G05B 19/418

(54) **VERFAHREN UND VORRICHTUNG ZUM BEREITSTELLEN EINES ABBILDS EINES FELDBUSKOPPLERS AUF EINEM SERVICE-RECHNER**
INPUT/OUTPUT SYSTEM FOR AN INDUSTRIAL AUTOMATION SYSTEM AND METHOD FOR PROVIDING AN IMAGE OF AN INPUT/OUTPUT SYSTEM
SYSTÈME D'ENTRÉE/SORTIE POUR SYSTÈME D'AUTOMATISME INDUSTRIEL ET PROCÉDÉ DE FOURNITURE D'UNE REPRÉSENTATION D'UN SYSTÈME D'ENTRÉE/SORTIE

(30) Priorität: 01.10.2013 DE 102013110895
(43) Veröffentlichungstag der Anmeldung: 10.08.2016
(73) Patentinhaber: Weidmüller Interface GmbH & Co. KG, 32758 Detmold (DE)
(72) Erfinder: KRONER, Michael, 33813 Oerlinghausen (DE)
(74) Vertreter: Kleine, Hubertus
(86) Internationale Anmeldenummer: PCT/EP2014/070977
(87) Internationale Veröffentlichungsnummer: WO 2015/049251

(56) Entgegenhaltungen:
- EP-A1- 2 317 409
- WO-A1-03/036400
- US-A1- 2013 249 775

## Beschreibung

Die Erfindung betrifft ein Verfahren zum Bereitstellen eines Abbilds eines Ein-/Ausgabesystems für ein industrielles Automatisierungssystem. Die Erfindung betrifft weiterhin ein zur Durchführung des Verfahrens geeignetes Ein-/Ausgabesystem.

In industriellen Automatisierungssystemen werden Feldbusse zur Übertragung von Steuerungsdaten und/oder Messwerten zwischen einem oder mehreren zentralen Steuerungsrechnern, auch Leitrechner oder speicherprogrammierbare Steuerung (SPS) genannt, und Feldgeräten ausgetauscht. Ein häufig benötigter und vielfach eingesetzter Typ von Feldgeräten sind Ein-/Ausgabemodule, die analoge und/oder digitale Ein- und/oder Ausgangskanäle bereitstellen, über die Anlagenkomponenten gesteuert werden können und Messwerte, beispielsweise von Sensoren, eingelesen werden können. Aufgrund der in den meisten industriellen Automatisierungssystemen eingesetzten großen Anzahl von derartigen Ein-/Ausgabemodulen werden diese häufig nicht unmittelbar an den Feldbus angeschlossen, sondern über den eingangs genannten Feldbuskoppler, der eine Datenschnittstelle zwischen dem Feldbus einerseits und einem häufig proprietären Subbus andererseits darstellt. An den Subbus kann eine Mehrzahl von busfähigen Modulen, beispielsweise die genannten Ein-/Ausgabemodule angekoppelt werden. Die Kombination eines Feldbuskopplers mit ggf. mehreren Modulen wird als Ein-/Ausgabesystem oder auch Remote-I/O (input/output) System bezeichnet.

Der Feldbuskoppler, auch Feldbus-Gateway genannt, dient in der Regel auch der Konfiguration der angeschlossenen Module. Zu diesem Zweck wird der Feldbuskoppler mit einem externen (Service-)Rechner verbunden, über den eine Konfiguration, eine Einrichtung, eine Inbetriebnahme und/oder eine Wartung des Feldbuskopplers ebenso wie der angeschlossenen Module erfolgen können. Die genannten Vorgänge der Inbetriebnahme, der Einrichtung, der Konfiguration und der Wartung werden nachfolgend zusammenfassend als Servicevorgänge bezeichnet. Häufig ist zur Durchführung der Servicevorgänge eine dedizierte Service-Schnittstelle, beispielsweise eine USB (universal serial bus)-Datenschnittstelle am Feldbuskoppler vorgesehen. Alternativ können die genannten Vorgänge auch über einen an den Feldbus angeschlossenen Steuerungsrechner erfolgen. Im Rahmen der Anmeldung wird der Rechner, von dem aus ein Servicevorgang ausgeführt wird, als Servicerechner bezeichnet, unabhängig davon, ob dieser Rechner über den Feldbus oder über die separate Serviceschnittstelle mit dem Feldbuskoppler verbunden ist.

Zur Durchführung der Servicevorgänge ist es oft hilfreich, wenn ein grafisches Abbild des Feldbuskopplers und ggf. der angeschlossenen Module angezeigt wird. Beispielsweise wird so eine Zuordnung von Anschlüssen zu bestimmten in einem Steuerungsprogramm ansprechbaren Kanälen und ihrer Benennung auf diese Weise für den Benutzer leichter nachvollziehbar. Auf dem Servicerechner zur Durchführung der Servicevorgänge ablaufende Serviceprogramme sind zu diesem Zweck in der Lage, ein Abbild des Feldbuskopplers und der ggf. angeschlossenen Module auf einem Bildschirm des Servicerechners einzublenden. Um dieses Abbild erstellen zu können, ist auf dem Steuerrechner eine Sammlung (Bibliothek) mit einer Vielzahl von Grafikdateien hinterlegt, in denen jeweils ein oder mehrere Abbilder möglicher Komponenten eines Ein-/Ausgabesystems enthalten sind. Die Bibliothek sollte dabei Abbildungen aller verfügbaren Komponenten einer oder mehrerer Produktfamilien, die innerhalb des Ein-/Ausgabesystems verwendet werden können, umfassen. Bei Erweiterungen des Produktangebots und/oder bei einer Modifikation der Ausgestaltung bestimmter Komponenten ist diese Bibliothek entsprechend nicht mehr vollständig oder nicht mehr aktuell und kann das grafische Abbild des Ein-/Ausgabesystems unter Umständen nur unzureichend wiedergeben. Daraus resultiert die Notwendigkeit, die Bibliothek auf dem Servicerechner laufend im Rahmen von Aktualisierungen (Updates) an das aktuelle Produktportfolio anpassen zu müssen.

Die Druckschrift US 2013/0249775 A1 beschreibt Feldgeräte, die jeweils ein eigenes Display aufweisen, um Prozessdaten darzustellen. In einer vorteilhaften Ausgestaltung kann eines der Feldgeräte auch das Bild eines anderen Feldgeräts wiedergeben.

Auch die Druckschrift EP 2 317 409 A1 betrifft Feldgeräte, die in der Lage sind, ihre eigenen Prozessdaten darzustellen. Erstellte Bilder können weiter versendet werden. Die Druckschrift WO 03/036400 A1 betrifft Feldgeräte, die jeweils eigene Webserver beinhalten. Die einzelnen Webserver können Informationen in ein Netzwerk einstellen.

Gegenüber der zuvor genannten Darstellung des Abbilds eines Feldbuskopplers einschließlich angeschlossener Module erfordern die in den vorstehenden Druckschriften beschriebenen Vorgehensweisen komplexere und daher auch kostspieligere Feldgeräte. Zudem ist es für den Nutzer schwieriger, einen Überblick über das gesamte I/O-System zu haben, wenn jedes Feldgerät separat Abbilder oder sonstige Informationen bereitstellt.

Es ist eine Aufgabe der vorliegenden Erfindung, ein Verfahren und ein Ein-/Ausgabesystem zu schaffen, bei denen ein Abbild des Ein-/Ausgabesystems auf einem Servicerechner bereitgestellt wird, ohne dass dazu eine aufwendige ständige Aktualisierung einer Bibliothek auf dem Servicerechner notwendig ist und ohne dass vom Servicerechner Abbilder einzelner Feldgeräte gesammelt werden müssen.

Diese Aufgabe wird gelöst durch ein Verfahren und ein Ein-/Ausgabesystem mit den jeweiligen Merkmalen der unabhängigen Ansprüche. Vorteilhafte Ausgestaltungen und Weiterbildungen sind Gegenstand der abhängigen Ansprüche.

Erfindungsgemäß umfasst das Verfahren zum Bereitstellen eines Abbilds eines Ein-/Ausgabesystems, das einen Feldbuskoppler zur Anbindung von Modulen an einen Feldbus über einen Subbus aufweist, die folgenden Schritte:
Es wird eine Bilddaten enthaltende Abbilddatei in dem Feldbuskoppler hinterlegt. Zudem wird in einem mit dem Feldbuskoppler koppelbaren Modul eine weitere Bilddaten enthaltende weitere Abbilddatei hinterlegt, die über den Subbus an den Feldbuskoppler übertragen wird. Die Bilddaten aus der Abbilddatei und der weiteren Abbilddatei werden dann an einen mit dem Feldbuskoppler verbunden Servicerechner übertragen, der anhand der übertragenen Bilddaten, die den Feldbuskoppler betreffen, und der weiteren Bilddaten, die das Modul betreffen, das Abbild erzeugt und zur Darstellung beispielsweise auf einem Bildschirm des Servicerechners ausgibt.

Die Abbilddatei mit den Bilddaten, die das charakteristische Aussehen des Feldbuskopplers und des Moduls wiedergeben, sind so unabhängig von einer zentralen, auf dem Servicerechner oder an anderer zentraler Stelle gespeicherten Bibliothek verfügbar. Die Abbilddateien können beispielsweise bereits herstellerseitig in dem Feldbuskoppler abgelegt werden. Auf diese Weise ist sichergestellt, dass dem Servicerechner für jeden verwendeten Feldbuskoppler-Typ das passende Abbild verfügbar ist.

Auf eine zentrale, auf dem Servicerechner gespeicherte Bibliothek der Abbilder der verschiedenen möglichen Komponenten des
Ein-/Ausgabesystems kann verzichtet werden. Bei Erweiterung der Produktpalette braucht entsprechend keine Ergänzung einer solchen Bibliothek erfolgen.

In einer vorteilhaften Ausgestaltung des Verfahrens werden die Bilddaten und ggf. die weiteren Bilddaten nach Empfang einer von dem Servicerechner an den Feldbuskoppler gesendeten Anfrage an den Servicerechner übertragen. Auf diese Weise erfolgt ein Datentransfer nur und erst dann, wenn die Bilddaten auch benötigt werden.

In einer vorteilhaften Ausgestaltung des Verfahrens werden die weiteren Bilddaten erst nach dem Empfang der Anfrage von dem Modul an den Feldbuskoppler übertragen. Auch der Datentransfer von dem oder den Modulen zu dem Feldbuskoppler erfolgt damit nur bei Bedarf. Alternativ kann jedoch vorgesehen sein, die weiteren Bilddaten bereits in einer Initialisierungsphase des Ein-/Ausgabesystems von dem Modul an den Feldbuskoppler zu übertragen und dort zwischenzuspeichern. Dabei ergibt sich als Vorteil eine schnellere Verfügbarkeit der Abbilder der Module, falls diese vom Servicerechner angefragt werden. Bei mehrfacher Anfrage durch den Servicerechner ergibt sich zudem eine Verringerung des Datentransfers auf dem Subbus.

Bevorzugt werden die Abbilddatei und/oder die weitere Abbilddatei in einem Festwertspeicher hinterlegt. Dieser kann besonders bevorzugt ein zum Speichern der sogenannten Firmware oder von Einstellungen des Feldbuskopplers bzw. der Module benutzter Festwertspeicher sein, insbesondere ein Flash-Speicher. Weiter bevorzugt kann Abbilddatei Teil der Firmware sein, so dass sie bei Bedarf mit der Firmware aktualisiert bzw. nachgerüstet werden kann.

Das anmeldungsgemäße Verfahren kann im Zusammenhang mit einem Servicerechner ausgeführt werden, der über eine Serviceschnittstelle, die insbesondere gemäß dem USB-Standard ausgebildet ist, mit dem Feldbuskoppler verbunden ist. Alternativ kann der Servicerechner auch über den Feldbus mit dem Feldbuskoppler verbunden sein.

Ein erfindungsgemäßes Ein-/Ausgabesystem für ein industrielles Automatisierungssystem weist einen Feldbuskoppler zur Anbindung von Modulen an einen Feldbus auf und mindestens ein mit dem Feldbuskoppler gekoppeltes Modul. Der Feldbuskoppler weist einen Festwertspeicher auf, in dem eine Abbilddatei mit einem schematischen Abbild einer Ansicht des Feldbuskopplers hinterlegt ist, und das Modul weist einen Festwertspeicher auf, in dem eine weitere Abbilddatei mit einem schematischen Abbild einer Ansicht des Moduls hinterlegt ist.

Ein derartiges Ein-/Ausgabesystem ist zur Durchführung des erfindungsgemäßen Verfahrens eingerichtet, wobei sich die zuvor beschriebenen Vorteile ergeben.

Die Erfindung wird nachfolgend anhand eines Ausführungsbeispiels mithilfe von zwei Figuren näher erläutert. Die Figuren zeigen:
- Fig. 1: eine industrielle Automatisierungsanlage in einem schematischen Blockschaltbild; und
- Fig. 2: eine Ausgestaltung eines Feldbuskopplers zur Durchführung eines anmeldungsgemäßen Verfahrens.

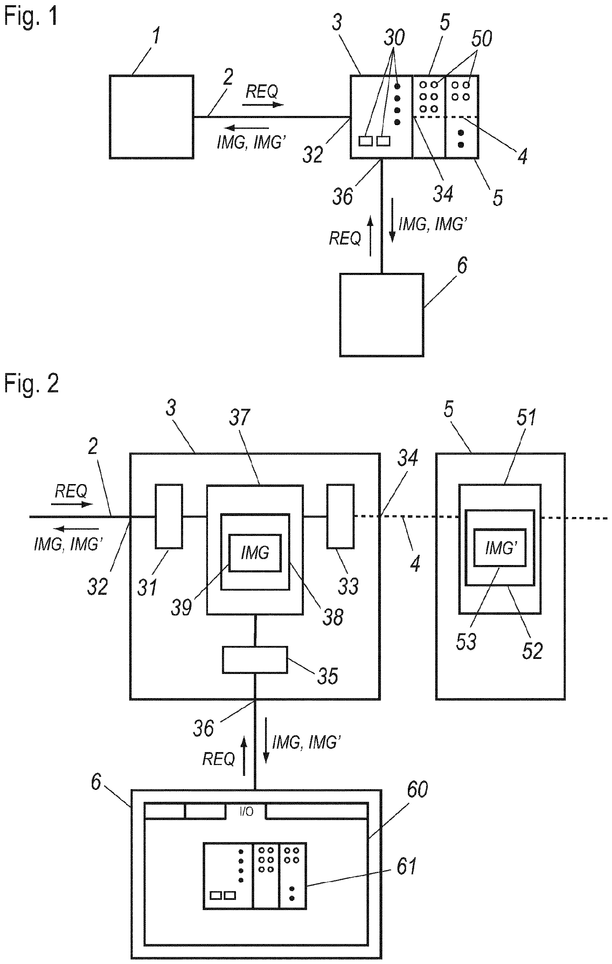

Fig. 1 zeigt in einer schematischen Darstellung einen möglichen Aufbau eines industriellen Automatisierungssystems.

Dieses weist einen Steuerungsrechner 1 auf, der über einen Feldbus 2 mit einem Feldbuskoppler 3 zum Austausch von Daten mit diesem verbunden ist. Der Feldbus kann dabei gemäß einem bekannten Standard wie beispielsweise PROFIBUS, PROFINET, EtherCAT oder CANopen ausgebildet sein.

Der Feldbuskoppler 3 setzt über den Feldbus 2 ausgetauschte Daten auf einen bevorzugt seriellen Subbus 4 um, über den Module 5 an den Feldbuskoppler 3 angekoppelt sind. Neben dem Subbus 4, der in diesem Ausführungsbeispiel nur einer Übertragung von Daten dient, kann ein weiterer, hier nicht gezeigter Bus zur Stromversorgung der Module 5 und/oder des Feldbuskopplers 3 vorhanden sein. Zur Einspeisung von Versorgungsstrom sind dann zusätzlich Stromversorgungsmodule vorgesehen, die am Ende der dargestellten Anordnung der Module 5 oder zwischen Modulen 5 oder zwischen dem Feldbuskoppler 3 und den Modulen 5 angeordnet sein können. Die dargestellten Module 5 können Ein-/Ausgabemodule sein oder auch sonstige Funktionsmodule, beispielsweise Signalwandler oder Interfacemodule. Auch ein Stromversorgungsmodul, das über den Subbus 4 mit dem Feldbuskoppler 3 kommunizieren kann, stellt in diesem Sinne ein Modul 5 dar.

Der Feldbuskoppler 3 weist in dem gezeigten Ausführungsbeispiel zudem einen Serviceanschluss 36 auf, über den er mit einem Servicerechner 6 verbunden ist. Der Serviceanschluss 36 kann beispielsweise gemäß dem USB-Standard ausgebildet sein. Über den Servicerechner 6 können vor Ort Serviceaufgaben an dem Feldbuskoppler und den daran angeschlossenen Modulen vorgenommen werden. Wie eingangs bereits erwähnt, ist unter dem Begriff "Servicevorgang" im Rahmen dieser Anmeldung unter anderem eine Konfiguration, eine Einrichtung, eine Inbetriebnahme und/oder eine Wartung des Feldbuskopplers 3 und/oder der Module 5 zu verstehen. Zudem kann auch eine Programmierung eines Steuerungsprogramms zur Steuerung der mit dem Feldbuskoppler 3 bzw. den Modulen 5 verbundenen und zu steuernden industriellen Anlage als ein Servicevorgang angesehen werden. Falls die Servicevorgänge von dem Steuerungsrechner 1 ausgeführt werden, stellt dieser ebenfalls einen Servicerechner im Sinne dieser Anmeldung dar.

Der Feldbuskoppler 3 sowie die angeschlossenen Module 5 haben ein charakteristisches Aussehen, das maßgeblich durch die Proportionen der Anschlussfläche sowie darauf angeordneter Elemente 30 bzw. 50 geprägt ist. Die Elemente 30, 50 sind beispielsweise Anschlüsse bzw. Anschlussmöglichkeiten, Einstellelemente oder Signalelemente.

Bei der Durchführung der Servicetätigkeiten ist es hilfreich, ein Abbild der aktuellen Konfiguration des Feldbuskopplers 3 und der daran angeschlossenen Module 5 visualisiert vor Augen zu haben. Anmeldungsgemäß ist zu diesem Zweck vorgesehen, entsprechende Abbilddateien, in denen je mindestens ein Abbild des Feldbuskopplers 3 bzw. des jeweiligen Moduls 5 in dem Feldbuskoppler 3 bzw. dem jeweiligen Modul 5 abzuspeichern und dem Servicerechner zur Verfügung zu stellen.

In Fig. 2 ist der Aufbau eines zur Durchführung des anmeldungsgemäßen Verfahrens eingerichteten Feldbuskopplers 3 mit einem ebenfalls anmeldungsgemäß ausgebildeten Modul 5 in einem schematischen Blockschaltbild detaillierter dargestellt.

Der Feldbuskoppler 3 weist als zentralen Baustein eine Steuereinrichtung 37 auf, die beispielsweise eine Ablaufsteuerung (Microcontroller) umfasst. Die Steuereinrichtung 37 steht über eine Feldbusanschaltung 31 mit dem Feldbusanschluss 32 und damit dem Feldbus 2 in Verbindung und steht über eine Subbusanschaltung 33 mit dem Subbusanschluss 34 und damit dem Subbus 4 in Verbindung. Die Steuereinrichtung 37 ist durch ein Steuerprogramm dazu eingerichtet, über den Feldbus 2 empfangende Daten auf den Subbus 4 umzusetzen, und umgekehrt vom Subbus 4 empfangene Daten umzusetzen und über den Feldbus 2 weiterzuleiten.

Zur Verbindung mit dem Serviceanschluss 36 und damit dem Servicerechner 6 ist zudem eine Servicebusanschaltung 35 vorgesehen, die ebenfalls mit der Steuereinrichtung 37 verbunden ist. Bei Verwendung einer USB-Verbindung zwischen dem Feldbuskoppler 3 und dem Servicerechner 6 wird der Serviceanschluss 36 auch als USB-Schnittstelle und die Servicebusanschaltung 35 als USB-Controller bezeichnet.

Der Feldbuskoppler 3 weist einen Festwertspeicher 38 auf, in dem eine Abbilddatei 39 gespeichert ist, in der ein oder mehrere Abbilder des Feldbuskopplers 3 abgelegt sind. Die Abbilder zeigen die Anschlussfläche des Feldbuskopplers 3 mit seinen anschlussseitigen Elementen 30 in zumindest schematischer Art und Weise. Die Abbilddatei 39 umfasst Bilddaten IMG, beispielsweise in einem üblichen Grafikformat wie TIFF, GIF, PNG oder JPEG. Als Festwertspeicher 38 kann beispielsweise ein Flash-Speicher dienen, in dem auch Programme (Firmware) und Einstellungen der Steuereinrichtung 37 abgelegt sind.

Das in Fig. 2 beispielhaft dargestellte Modul 5 weist ebenfalls eine Steuereinrichtung 51 auf, die wiederum neben einem nicht dargestellten Mikrocontroller einen Festwertspeicher 52 umfasst, in dem eine weitere Abbilddatei 53 eines oder mehrerer Abbilder des Moduls 5 gespeichert ist. Die weitere Abbilddatei 53 enthält weitere Bilddaten IMG'. Aus Gründen der einfacheren Darstellung sind weitere Komponenten des Moduls 5, beispielsweise und Busanschaltungen oder Ein-/Ausgabebausteine, nicht dargestellt.

Beim Durchführen eines Servicevorgangs auf einem Rechner, hier beispielhaft dem Servicerechner 6, wird ein Serviceprogramm 60 ausgeführt. Das Serviceprogramm 60 bietet für den Anwender die jeweils gewünschte Servicefunktionalität, also beispielsweise die Möglichkeit, den Feldbuskoppler 3 und/oder die Module 5 zu konfigurieren, einzurichten, zu warten oder Statusinformationen abzurufen. Unterstützend stellt das Serviceprogramm 60 ein Abbild 61 des Ein-/Ausgabesystems dar. Um dieses Abbild 61 zu generieren, setzt das Serviceprogramm 60 eine entsprechende Anfrage REQ an den Feldbuskoppler 3 ab, mit dem eine Übermittlung der Bilddaten IMG aus der Abbilddatei 39 des Feldbuskopplers 3 bzw. der weiteren Bilddaten IMG' aus der bzw. den weiteren Abbilddateien 53 des oder der Module 5 angefragt wird. In Reaktion auf diese Anfrage REQ übersendet der Feldbuskoppler 3 die in der Abbilddatei 39 enthaltenen Bilddaten IMG an den Servicerechner 6.

Zudem werden die weiteren Bilddaten IMG' von angeschlossenen Modulen 5 über den Subbus 4 zum Feldbuskoppler 3 übertragen und ebenfalls an den Servicerechner 6 gesendet. Zur Übertragung der weiteren Bilddaten IMG' kann vorgesehen sein, dass der Feldbuskoppler 3 nach Empfang der Anfrage REQ über den Subbus 4 eine entsprechende Anfrage an die Module 5 absetzt. In dem Fall werden die weiteren Bilddaten IMG' nur bei Bedarf zum Feldbuskoppler 3 übertragen. Es kann alternativ vorgesehen sein, dass der Feldbuskoppler 3 die eine entsprechend Anfrage an die Module 5 bereits vorab in einer Initialisierungsphase des Ein- /Ausgabesystems über den Subbus 4 sendet und die in Reaktion auf die Anfrage zurückgeschickten weiteren Bilddaten IMG' in seinem Festwertspeicher 38 zwischenspeichert.

Da die entsprechenden Abbilddateien 39, 53 vorzugsweise bereits herstellerseitig in den Festwertspeichern 38 bzw. 52 hinterlegt sind, steht dieses Abbild für einen neuen Produkttyp eines Feldbuskopplers 3 bzw. eines Moduls 5 unmittelbar beim Einsatz dieser Komponenten in einem Automatisierungssystem zur Verfügung.

Für Feldbuskoppler oder Module eines älteren Typs, die herstellerseitig noch nicht mit einem hinterlegten Abbild ausgeliefert wurden, besteht bei geeigneter Ausgestaltung der Komponenten die Möglichkeit, dieses Abbild zusammen mit einer Modifizierung des in der jeweiligen Steuereinrichtung ablaufenden Steuerprogramms in Form einer Aktualisierung der sogenannten Firmware dieses Feldbuskopplers bzw. Moduls nachzurüsten.

Darüber hinaus kann das beschriebene Verfahren mit dem aus dem Stand der Technik bekannten Verfahren kombiniert werden, bei denen Abbilder von möglicherweise innerhalb des Ein-/Ausgabesystems benutzten Komponenten in einer Bibliothek auf dem Servicerechner hinterlegt sein. Falls ein Abbild vom Feldbuskoppler oder dem Modul anmeldungsgemäß von dem Feldbuskoppler oder dem Modul selbst bereitgestellt wird, wird dieses Abbild verwendet. Anderenfalls wird ein Abbild in der Bibliothek gesucht und bei Übereinstimmung des Typs des Feldbuskopplers bzw. des Moduls dieses verwendet.

### Bezugszeichenliste

- 1: Steuerungsrechner
- 2: Feldbus
- 3: Feldbuskoppler
- 4: Subbus
- 5: Modul
- 6: Servicerechner

- 30: Frontplattenelemente
- 31: Feldbusanschaltung
- 32: Feldbusanschluss
- 33: Subbusanschaltung
- 34: Subbusanschluss
- 35: Servicebusanschaltung
- 36: Servicebusanschluss
- 37: Steuereinrichtung
- 38: Festwertspeicher
- 39: Abbilddatei

- 50: Frontplattenelemente
- 51: Steuereinrichtung
- 52: Festwertspeicher
- 53: weitere Abbilddatei

- 60: Serviceprogramm
- 61: Abbild

- IMG: Bilddaten
- IMG': weitere Bilddaten
- REQ: Anfrage

## Patentansprüche

1. Verfahren zur Bereitstellung eines Abbilds (61) eines Ein-/Ausgabesystems für ein industrielles Automatisierungssystem, das einen Feldbuskoppler (3) zur Anbindung von Modulen an einen Feldbus (2) über einen Subbus (4) aufweist, mit den folgenden Schritten:
- Hinterlegen einer Bilddaten (IMG) enthaltenden Abbilddatei (39) in dem Feldbuskoppler (3), wobei die Bilddaten (IMG) ein schematisches Abbild einer Ansicht des Feldbuskopplers (3) betreffen;
- Hinterlegen einer weitere Bilddaten (IMG') enthaltenden weiteren Abbilddatei (53) in mindestens einem mit dem Feldbuskoppler (3) gekoppelten Modul (5), wobei die weitere Bilddaten (IMG') ein schematisches Abbild einer Ansicht des Moduls (5) betreffen;
- Übertragen der weiteren Bilddaten (IMG') aus der jeweiligen weiteren Abbilddatei (53) über den Subbus (4) an den Feldbuskoppler (3);
- Übertragen der Bilddaten (IMG) aus der Abbilddatei (39) an einen mit dem Feldbuskoppler (3) verbunden Servicerechner (6);
- Weiterleiten der weiteren Bilddaten (IMG') von dem Feldbuskoppler (3) an den Servicerechner (6); und
- Erzeugen und Ausgeben des Abbilds (61) anhand der übertragenen Bilddaten (IMG) und der weiteren Bilddaten (IMG').

2. Verfahren nach Anspruch 1, bei dem die Bilddaten (IMG) und ggf. die weiteren Bilddaten (IMG') nach Empfang einer von dem Servicerechner (6) an den Feldbuskoppler (3) gesendeten Anfrage (REQ) an den Servicerechner (6) übertragen werden.

3. Verfahren nach Anspruch 2, bei dem die weiteren Bilddaten (IMG') erst nach dem Empfang der Anfrage (REQ) von dem mindestens einen Modul (5) an den Feldbuskoppler (3) übertragen werden.

4. Verfahren nach Anspruch 2, bei dem die weiteren Bilddaten (IMG') bereits in einer Initialisierungsphase des Ein-/Ausgabesystems von dem mindestens einen Modul (5) an den Feldbuskoppler (3) übertragen und dort zwischengespeichert werden.

5. Verfahren nach einem der Ansprüche 1 bis 4, bei dem die Abbilddatei (39) und/oder die mindestens eine weitere Abbilddatei (53) in einem Festwertspeicher (38, 52) hinterlegt wird.

6. Verfahren nach einem der Ansprüche 1 bis 5, bei dem der Servicerechner (6) über eine Serviceschnittstelle, die insbesondere gemäß dem USB-Standard ausgebildet ist, mit dem Feldbuskoppler (3) verbunden ist.

7. Verfahren nach einem der Ansprüche 1 bis 5, bei dem der Servicerechner (6) über den Feldbus (2) mit dem Feldbuskoppler (3) verbunden ist.

8. Ein-/Ausgabesystem für ein industrielles Automatisierungssystems mit einem Feldbuskoppler (3) zur Anbindung von Modulen an einen Feldbus (2) und mindestens einem mit dem Feldbuskoppler (3) gekoppelten Modul (5), wobei der Feldbuskoppler (3) einen Festwertspeicher (38) aufweist, in dem eine Abbilddatei (39) mit einem schematischen Abbild einer Ansicht des Feldbuskopplers (3) hinterlegt ist, und wobei das Modul (59) einen Festwertspeicher (52) aufweist, in dem eine weiteren Abbilddatei (53) mit einem schematischen Abbild einer Ansicht des Moduls (5) hinterlegt ist, **dadurch gekennzeichnet, dass** das Ein-/Ausgabesystem zur Durchführung eines Verfahrens gemäß einem der Ansprüche 1 bis 7 ausgebildet ist.

## Claims

1. Method for providing an image (61) of an input/output system for an industrial automation system, which comprises a fieldbus coupler (3) for the connection of modules to a fieldbus (2) via a subbus (4), having the following steps:
- storing an image file (39) containing image data (IMG) in the fieldbus coupler (3), wherein the image data (IMG) relate to a diagrammatic image of a view of the fieldbus coupler (3);
- storing an additional image file (53) containing additional image data (IMG') in at least one module (5) coupled to the fieldbus coupler (3), wherein the additional image data (IMG') relate to a diagrammatic image of a view of the module (5);
- transmitting the additional image data (IMG') from the respective additional image file (53) via the subbus (4) to the fieldbus coupler (3);
- transmitting the image data (IMG) from the image file (39) to a service computer (6) connected to the fieldbus coupler (3);
- forwarding the additional image data (IMG') from the fieldbus coupler (3) to the service computer (6); and
- generating and outputting the image (61) on the basis of the transmitted image data (IMG) and the additional image data (IMG').

2. Method according to claim 1, wherein the image data (IMG) and optionally the additional image data (IMG') are transmitted to the service computer (6) after the reception of a request (REQ) sent by the service computer (6) to the fieldbus coupler (3).

3. Method according to claim 2, wherein the additional image data (IMG') are transmitted from the at least one module (5) to the fieldbus coupler (3) only after the reception of the request (REQ).

4. Method according to claim 2, wherein the additional image data (IMG') are transmitted already in an initialization phase of the input/output system from the at least one module (5) to the fieldbus coupler (3) and are intermediately stored there.

5. Method according to one of the claims 1 to 4, wherein the image file (39) and/or the at least one additional image file (53) is/are stored in a read-only memory (38, 52).

6. Method according to one of the claims 1 to 5, wherein the service computer (6) is connected to the fieldbus coupler (3) via a service interface which is configured in particular according to the USB standard.

7. Method according to one of the claims 1 to 5, wherein the service computer (6) is connected via the fieldbus (2) to the fieldbus coupler (3).

8. Input/output system for an industrial automation system, having a fieldbus coupler (3) for the connection of modules to a fieldbus (2) and at least one module (5) coupled to the fieldbus coupler (3), wherein the fieldbus coupler (3) comprises a read-only memory (38) in which an image file (39) with a diagrammatic image of a view of the fieldbus coupler (3) is stored, and wherein the module (59) comprises a read-only memory (52) in which an additional image file (53) with a diagrammatic image of a view of the module (5) is stored, **characterized in that** the input/output system is designed for carrying out a method according to one of the claims 1 to 7.

## Revendications

1. Procédé pour fournir une image (61) d'un système d'entrée/sortie pour un système d'automatisation industrielle, qui comporte un coupleur de bus de terrain (3) servant à relier des modules à un bus de terrain (2) par l'intermédiaire d'un sous-bus (4), comprenant les étapes suivantes :
- stockage d'un fichier d'image (39) contenant des données d'image (IMG) dans le coupleur de bus de terrain (3), les données d'image (IMG) concernant une image schématique d'une vue du coupleur de bus de terrain (3) ;
- stockage d'un autre fichier d'image (53) contenant d'autres données d'image (IMG') dans au moins un module (5) couplé au coupleur de bus de terrain (3), les autres données d'image (IMG') concernant une image schématique d'une vue du module (5) ;
- transfert des autres données d'image (IMG') de l'autre fichier d'image respectif (53) via le sous-bus (4) au coupleur de bus de terrain (3) ;
- transfert des données d'image (IMG) du fichier d'image (39) à un ordinateur de service (6) relié au coupleur de bus de terrain (3) ;
- transmission des autres données d'image (IMG') du coupleur de bus de terrain (3) à l'ordinateur de service (6) ; et
- génération et sortie de l'image (61) à partir des données d'image (IMG) transférées et des autres données d'image (IMG').

2. Procédé selon la revendication 1, dans lequel les données d'image (IMG) et, le cas échéant, les autres données d'image (IMG') sont transférées à l'ordinateur de service (6) après réception d'une requête (REQ) envoyée par l'ordinateur de service (6) au coupleur de bus de terrain (3).

3. Procédé selon la revendication 2, dans lequel les autres données d'image (IMG') ne sont transférées dudit au moins un module (5) au coupleur de bus de terrain (3) qu'après réception de la requête (REQ).

4. Procédé selon la revendication 2, dans lequel les autres données d'image (IMG') sont déjà transférées dudit au moins un module (5) au coupleur de bus de terrain (3) et y sont temporairement stockées dans une phase d'initialisation du système d'entrée/sortie.

5. Procédé selon l'une des revendications 1 à 4, dans lequel le fichier d'image (39) et/ou ledit au moins un autre fichier d'image (53) sont stockés dans une mémoire morte (38, 52).

6. Procédé selon l'une des revendications 1 à 5, dans lequel l'ordinateur de service (6) est relié au coupleur de bus de terrain (3) par l'intermédiaire d'une interface de service qui est conçu en particulier selon la norme USB.

7. Procédé selon l'une des revendications 1 à 5, dans lequel l'ordinateur de service (6) est relié au coupleur de bus de terrain (3) par l'intermédiaire du bus de terrain (2).

8. Système d'entrée/sortie pour un système d'automatisation industrielle, comprenant un coupleur de bus de terrain (3) servant à relier des modules à un bus de terrain (2) et au moins un module (5) couplé au coupleur de bus de terrain (3), le coupleur de bus de terrain (3) comportant une mémoire morte (38) dans laquelle est stocké un fichier d'image (39) avec une image schématique d'une vue du coupleur de bus de terrain (3), et le module (59) comportant une mémoire morte (52) dans laquelle est stocké un autre fichier d'image (53) avec une image schématique d'une vue du module (5), **caractérisé en ce que** le système d'entrée/sortie est conçu pour mettre en oeuvre un procédé selon l'une des revendications 1 à 7.
